# EUROPEAN PATENT SPECIFICATION

(11) **EP 3 463 595 B1**
(45) Date of publication and mention of the grant of the patent: **23.12.2020**
(21) Application number: 17729414.7
(22) Date of filing: 26.05.2017
(51) Int. Cl.: A63B 21/02, A63B 21/04, A63B 23/16, A63B 21/00

(54) **EXERCISING DEVICE**
ÜBUNGSVORRICHTUNG
DISPOSITIF D'EXERCICE

(30) Priority: 01.06.2016 NO 20160945
(43) Date of publication of application: 10.04.2019
(73) Proprietor: Actiweight AS, 9009 Tromsø (NO)
(72) Inventor: LOHNE, Gard, Mikalsen, N-9016 Tromsø (NO); SLETTEN, Marcus, Christian, N-9009 Tromsø (NO)
(74) Representative: Onsagers AS
(86) International application number: PCT/EP2017/062780
(87) International publication number: WO 2017/207439

(56) References cited:
- WO-A1-2013/006542
- DE-U1- 29 709 058
- KR-Y1- 200 471 197
- US-A- 1 026 215
- US-A- 4 279 415
- US-A- 4 681 315
- US-A- 4 798 377
- US-A- 5 087 032

## Description

### FIELD OF THE INVENTION

The present invention relates to an exercising device. In particular, the present invention relates to an exercising device for connection to a rod, more specifically a weight rod.

### BACKGROUND OF THE INVENTION

Several types of excising devices exist, such as weights for weight lifting, comprising a rod onto which weight discs can be inserted or removed or a rod with fixed weight. Weight lifting may also be performed with weight training apparatuses.

Several combined exercising apparatuses exists. WO 2013/006542A1 describes a combined beverage holder and exercise apparatus. US 4 798 377 describes a bicycle handle bar grip with an exercise apparatus. Similarly, KR 200 471 197 describes a handgrip mounted handle of bicycle. US 1 026 215 describes a dumb-bell fixed to a gripper. US 4 681 315 describes a dumbbell with double cover hand protector and grasping training function. US 5 087 032 describes a combined weight assembly preferably in the form of a dumbbell with a grip exerciser device DE 297 09 058 describes an exercising apparatus with a tennisball fixed between two handles.

US 4 279 415 describes a foot training apparatus with a spring and a compressible material.

The object of the present invention is to improve the exercising effect during different types of training.

### SUMMARY OF THE INVENTION

The present invention relates to an exercising device according to claim 1, the device comprising:
- a first element having a longitudinal center axis;
- a second element having a first end movably connected to the first element via a connection device, and a second, free, end;
- a pre-tensioned force resistance device connected to the first or second elements;
where the exercising device is configured to be in an initial state, in which the second end is provided with a first distance from the longitudinal center axis; where the exercising device is configured to be in a compressed state, in which the second end is provided with a second distance from the longitudinal center axis, where the second distance is shorter than the first distance;
where the pre-tensioned force resistance device is configured to force the second end of the second element towards the initial state;
where the first element comprises a connection interface for connection to a rod.

The force resistance body is made of a compressible material configured to be gradually more compressed as the first and second elements are pressed towards each other.

The force resistance body comprises a base and a force resistance element, the resistance element is protruding through an opening of the first element and the base is configured to be in contact with the rod.

In one aspect, the first element, the second element and the connection device are manufactured as one body made of the same material. Alternatively, the material of the connection device is different from the material of the first element and the second element.

In one aspect, the pre-tensioned force resistance device is configured to allow a movement of the second end from the initial state to the compressed state when the first and second elements are pressed towards each other with a compression force above a predefined threshold value.

In one aspect, the second element is an elongated element having a longitudinal axis, where the longitudinal center axis of the first element is parallel with the longitudinal axis of the second element in the compressed state.

In one aspect, the second element is oriented with its longitudinal axis having an angle relative to the longitudinal center axis in the initial state, where the angle is between 10° - 80°, preferably between 15° - 45° and more preferably between 25° - 35°.

In one aspect, the first element comprises an elongated cylindrical body with a through bore.

In one aspect, a slit is provided in the longitudinal direction of the cylindrical body. In this way it is easy to snap the device 1 onto and off from a weight rod.

In one aspect, the exercising device is a hand actuated exercising device.

In one aspect, the force resistance body comprises a first resistance element and a second resistance element, where the first resistance element is located closer to the connection device than the second resistance element.

In one aspect, the first resistance element has a first height with respect to the first element being larger than a second height of the second resistance element with respect to the first element.

In one aspect, the pre-tensioned force resistance device is connected to the first and second elements.

In one aspect, the force resistance device comprises a spiral section, a first end section projecting from the spiral section and a second end section, where the first end section is connected to a groove of the second element and where the second end section is connected to a groove of the first element.

In one aspect, the spiral section is movably arranged outside a guiding body of the first element where the relative movement between the spiral section and the guiding body is limited by the engagement between the second end section and the grove.

In one aspect, the force resistance device is locked to the first element by means of a removable locking element.

### DETAILED DESCRIPTION

Embodiments of the invention will now be described in detail with reference to the enclosed drawings 10a-10f, while the drawings 1-9 disclose examples which are not part of the invention:
Fig. 1 illustrates a cross sectional side view of the exercising device mounted to a weight rod in an initial state;
Fig. 2 illustrates a cross sectional side view of the exercising device of fig. 1 in the compressed state;
Fig. 3 illustrates an exploded perspective view of the exercising device in the initial state;
Fig. 4 illustrates a top view of the exercising device in the compressed state;
Fig. 5 illustrates a cross sectional view along line A-A of fig. 4;
Fig. 6 illustrates a cross sectional view along line B-B of fig. 4;
Fig. 7 illustrates a cross sectional view along line C-C of fig. 4;
Fig. 8 illustrates a side view of the exercising device in the initial state;
Fig. 9 illustrates a side view of the exercising device in the compressed state;
Fig. 10a illustrates the invention from a first side;
Fig. 10b illustrates the further embodiment from a second side opposite of the first side;
Fig. 10c illustrates the further embodiment from below;
Fig. 10d illustrates a front view of further embodiment;
Fig. 10e illustrates a cross sectional view along line c-c of gig. 10b;
Fig. 10f illustrates a cross sectional view of the force resistance body of fig. 10d and 10e.

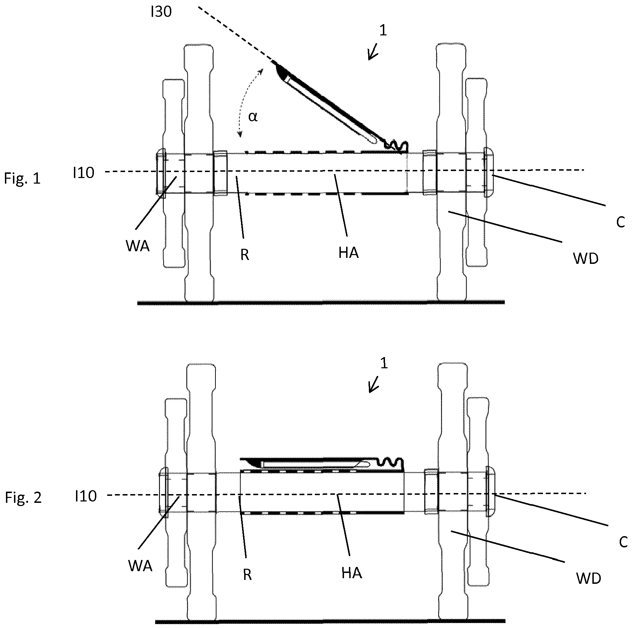

It is now referred to fig. 1 and 2. Here it is shown a weight rod R having a handle area HA and one weight area WA on the respective sides of the handle area HA. Four weight discs WD are inserted onto the weight areas WA of the weight rod. A connector C is connected to the ends of the weight rod R to prevent the weight discs WD from skidding off from the weight rod R.

An exercising device 1 is connected to the handle area HA of the weight rod R. In fig. 1 the exercising device 1 is in its inactive state, while in fig. 2 the exercising device 1 is in its active state.

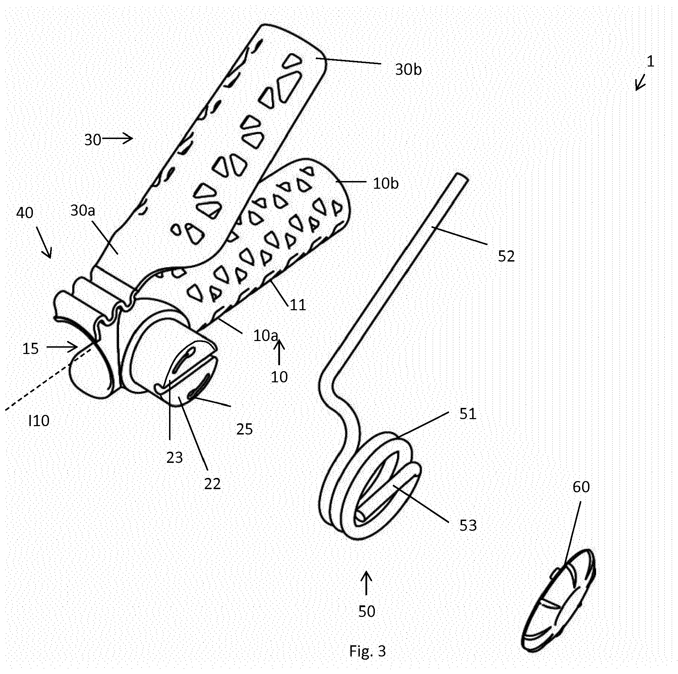

It is now referred to figs. 3 - 7, where the exercising device 1 is shown. The exercising device comprises a first element 10, a second element 30, a connection device 40 for connection of the first and second elements 10, 30 to each other, and a pre-tensioned force resistance device 50. Preferably, the exercising device 1 also comprises a locking element 60, which will be explained more in detail below. The exercising device 1 is configured to be in an initial state and in a compressed state, which will be explained more in detail below.

In the present example, the first element 10 comprises an elongated cylindrical body 11 with a through bore 12. A central longitudinal axis 110 of the first element 10 is indicated in the drawings. A slit 13 is provided in the longitudinal direction of the cylindrical body 11. The through bore 12 with the slit 13 forms a connection interface 15 for connection to a rod R. The first element 10 is preferably made of a semi-rigid material, such as a plastic material. In such a case the connection interface 15 will function as a snap-on connection interface to be pushed onto a weight rod R.

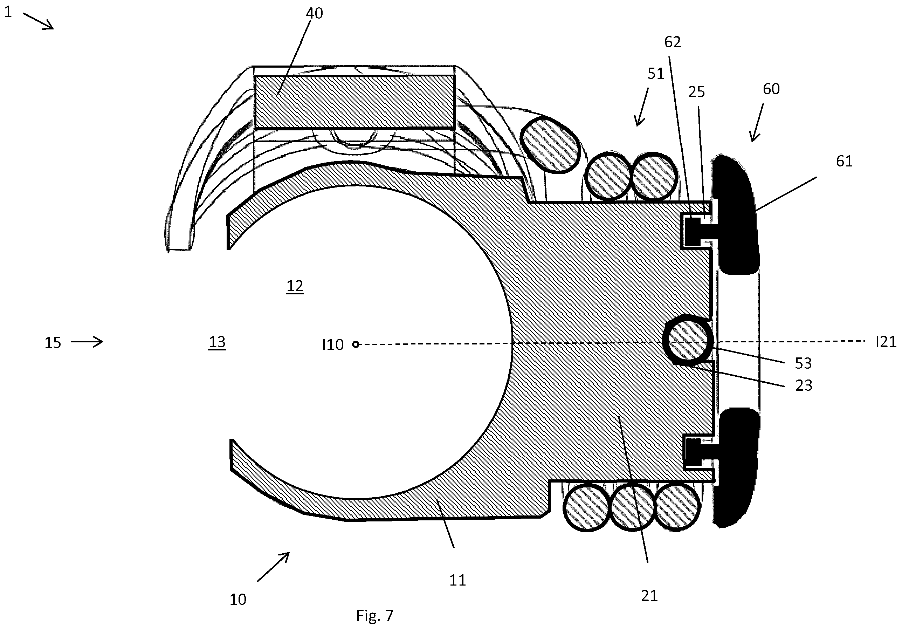

The first element 10 has a first end 10a and a second end 10b. In the second end 10b of the first element 10 a guiding body 21 is protruding perpendicular (indicated by line 121 in fig. 7) to the longitudinal axis 110. Preferably the guiding body 21 is cylindrical. A groove 23 is provided in the end surface 22 of the guiding body 21. In addition, locking grooves 25 are provided in the end surface 22.

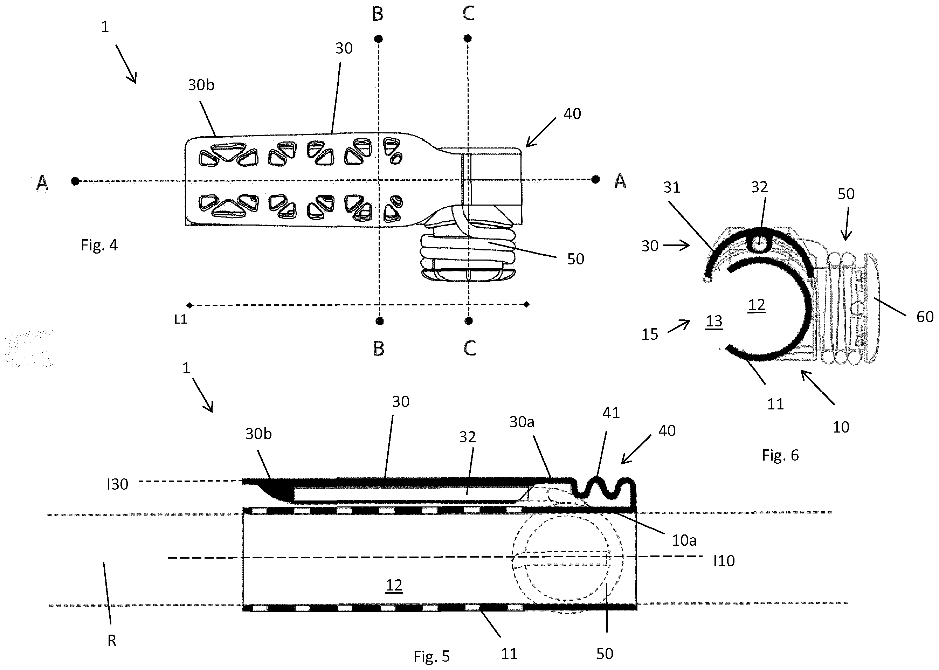

The second element 30 comprises an elongated, generally U-shaped body 31 (shown in fig. 6). A longitudinal axis 130 of the second element 30 is indicated in the drawings. A groove 32 is provided in the longitudinal direction 130 of the second element 30. The groove 32 is preferably facing inwards, towards the first element 10, as shown in fig. 3, 5 and 6. Hence, the outer surface (the surface facing away from the first element 10) may achieve an evenly curved surface which are more comfortable for a user to hold his fingers around.

The second element 30 has a first end 30a and a second end 30b. The first end 30a is movably connected to the first element 10 via the connection device 40, while the second end 30b is free, i.e. it is not connected to the first element 10 nor the connection device 40.

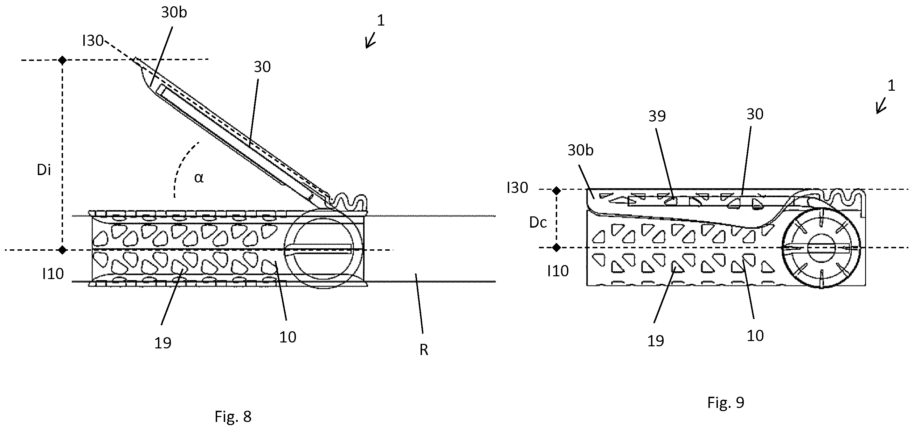

In the compressed state shown for example in fig. 5 and 9, the longitudinal center axis 110 of the first element 10 is parallel with the longitudinal axis I30 of the second element 30.

In the initial state shown for example in fig. 8, the second element 30 is having its longitudinal axis 130 oriented with an angle α relative to the longitudinal center axis 110, where the angle α is between 10° - 80°, preferably between 15° - 45° and more preferably between 25° - 35°.

The connection device 40 is best shown in fig. 5, comprising a wave-shaped body 41 connected between the first end 10a of the first element 10 and the first end 30a of the second element 30. Preferably, the first element 10, the second element 30 and the connection device 40 are manufactured as one body made of the same material. However, they may of course be made as three separate bodies connected to each other. The wave-shaped body 41 allows relative movement between the first and second elements 10, 30, as will be described in detail below.

The pre-tensioned force resistance device 50 is best shown in fig. 3 and comprises a spiral section 51, a first end section 52 projecting from the spiral section 51 and a second end section 53. The pre-tensioned force resistance device 50 is in the present example made of one continuous section of a metal spring material. The pre-tensioned force resistance device 50 is configured to force the second end 30b of the second element 30 towards the initial state. When the exercising device 1 is in the initial state, the pre-tensioned force resistance device 50 is configured to allow a movement of the second end 30b from the initial state to the compressed state when the first and second elements 10, 30 are pressed towards each other with a compression force above a predefined threshold value.

The force resistance device 50 is connected to the first and second elements 10, 30. The spiral section 51 is movably arranged outside the guiding body 21 of the first element 10, i.e. the spiral section 51 is, in principle, allowed to rotate around the guiding body 21. The first end section 52 is connected to the groove 32 of the second element 30. The second end section 53 is connected to the groove 23 of the first element 10.

The above relative rotational movement between the spiral section 51 and the guiding body 21 is limited by the engagement between the second end section 53 and the grove 23.

To ensure that the second end section 53 is kept connected to the groove 23, a locking element 60 is provided, as shown in fig. 3 and 7. The locking element 60 is in the present example provided as a circular lid 61 having connectors 62 adapted to the locking grooves 25 of the end surface 22 of the guiding body 21. These connectors 62 may be inserted into the locking grooves 25 and thereafter the locking device 60 may be rotated to a locked state. The locking device 60 may then be rotated back to the original position and removed from the locking grooves 25.

It should be noted that the force resistance device 50 may be connected to the groove 23 for example by providing the groove 23 itself as a type of snap-on connector.

The force resistance device 50 is relatively easy to assemble with the rest of the device 1. First, the first end section 52 is inserted into the groove 32 of the second element 30, then the spiral section 51 is put onto the guiding body 21 until the second end section 53 is inserted into the groove 23 of the first element 10. Finally, the locking device 60 is locked to the first element 10. Accordingly, it is relatively easy to replace the force resistance device 50 with another type of force resistance device, for example one requiring a stronger compression force to bring it to the compressed state.

It is now referred to fig. 8. Here it is shown that the exercising device 1 is in its initial state, in which the second end 30b is provided with a first distance Di from the longitudinal center axis I.

It is now referred to fig. 9. Here it is shown that the exercising device 1 is in its compressed state, in which the second end 30b is provided with a second distance Dc from the longitudinal center axis I. As shown, a compression has taken place, as the second distance Dc is shorter than the first distance Di.

The invention has been tested by the Norwegian School of Sport Sciences, where it has been shown that not only the muscles in the lower arm region, but also muscles in the upper arm region (biceps, triceps, shoulder) are experiencing an increased training effect when using the present invention during weight lifting than weight lifting without the use of the present invention.

In an alternative embodiment, the weight rod R may be inserted into the through bore 12, a solution which will require the weight discs WD to be removed from the weight rod R. In such an alternative embodiment, the slit 13 may be omitted, and the connection interface 15 is provided by the opening into the bore 12.

In such an embodiment, it is preferred that the weight rod R is not easily skiddable within the bore 12, as a tight fit between the bore 12 and weight rod R is preferred. A tight fit may be obtained by applying a friction lining (not shown) within the bore 12.

In the embodiments shown in the drawings, several perforations 19, 29 are provided in the first and second elements 10, 30 respectively. The purposes of these perforations are to improve the grip of the exercising device 10.

In one alternative embodiment, the groove 23 may be adjustable in relation to the first element 10, for example by providing the guiding body 21 rotatably connected to the body 11. The purpose of the adjustment is to amend the angle of the groove 23 in relation to the axis 110, to adjust the position of the end 53 of the force resistance device 50 and hence to adjust its force resistance.

In the above embodiments, the rod is a weight rod R. However, the rod may also be a ski pole, a handle of a cycle or other vehicle, a pram, a racket (such as a tennis racket), a hockey stick etc.

The connection interface 15 may be a releasable or permanent connection interface and may require additional releasable or permanent fastening means, such as straps, glue etc.

In yet an additional embodiment, an additional layer may be added to the first and/or second elements for increasing the comfort for the user, for example a layer of foam rubber layer or another type of soft layer.

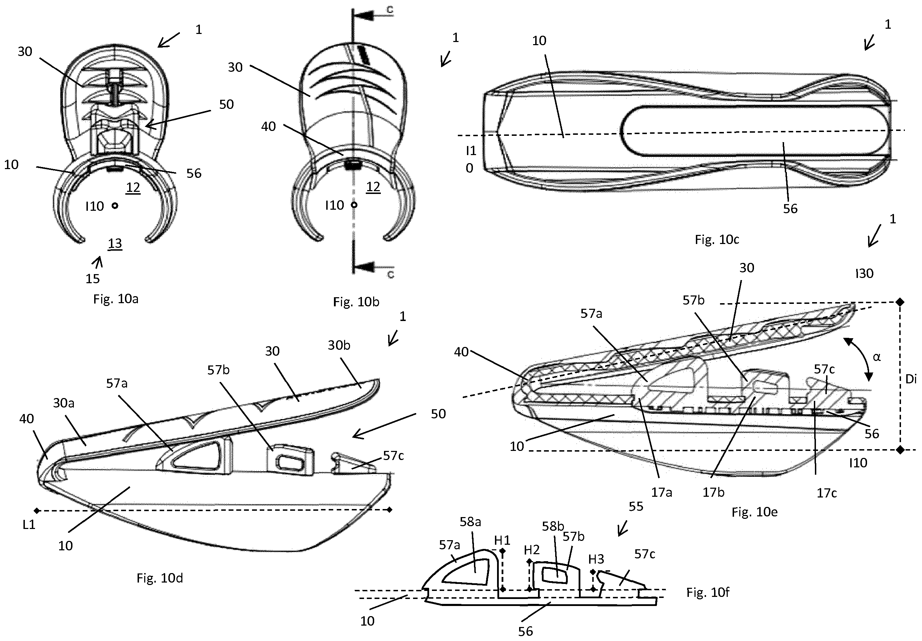

It is now referred to fig. 10a-10f. Here it is shown more in detail the invention, having first and second elements 10, 30 connected to each other by means of a connection device 40. In the present embodiment, the connection device 40 is made of the same material as the first and second elements 10, 30. Preferably, the elements 10, 30 and connection device 40 is made as one body. It should be noted that all figs. 10a - 10d shows the exercising device 1 in its initial state.

The pre-tensioned force resistance device 50 comprises a force resistance body 55 provided between the first and second elements 10, 30. The force resistance body 55 is made of a compressible material configured to be gradually more compressed as the first and second elements 10, 30 are pressed towards each other. This material can be a rubber material or another material with similar properties. After compression, the force resistance body 55 will return to its initial shape, thereby forcing the second end 30b of the second element 30 away from the first element 10 again.

The force resistance body 55 is here connected to the first element 10. Alternatively, the force resistance body 55 may be connected to the second element 30. In yet an alternative, the force resistance body 55 may be connected to both the first and second elements 10, 30. In this last alternative, the force resistance body 55 may prevent damage to the connection device 40 by preventing that the second end of the second element 30 is moved to far away from the first element 10.

The force resistance body 55 is in the present embodiment made as one, single body with a base 56, a first resistance element 57a, a second resistance element 57b and a third resistance element 57c. The base 56 is provided as part of the bore 12 of the first element 10, as shown in fig. 10a, while the resistance elements 57a, 57b, 57c are protruding through openings 17a, 17b, 17c of the first element 10 towards the second element 30. When the exercising device 1 is connected to a weight rod, compression of the device 1 will not press the resistance elements out from the openings as the base 56 will be in contact with the weight rod and hence prevent this. The body 55 may be glued to the first element 10.

Alternatively, the force resistance body 55 has no base 56 and hence comprises three separate resistance elements 57a, 57b, 57c which are glued directly onto the surface of the first element 10. Alternatively, there is only one resistance element 57a. In yet an alternative, there are two or more than three such resistance elements.

It is now referred to fig. 10f, where the body 55 is shown. The location of the first element 10 is indicated with dashed lines. The first resistance element 57a is shown to have a first height H1 with respect to the first element 10, the second element 57b is shown to have a second height H2 and the third element 57c is shown to have a third height H3, where H1 > H2 > H3. Openings 58a, 58b are provided in the first and second elements 57a, 57b to adjust the compression force, as it is preferred that the increase in compression force needed to bring the device 1 from its initial state to its compressed state is constant to achieve a smooth compression movement.

The first resistance element 57a is located closer to the connection device 40 than the second resistance element 57b, which again is closer to the connection device 40 than the third resistance element 57c.

The angle α is 12° in the initial state in this embodiment.

One advantage with the embodiment of fig. 10a - 10f is that the spiral section 51 of the force resistance device 50 shown in fig. 4 can be omitted. Hence, the total length L1 of the device 1 in fig. 10d is smaller than the total length L1 of the device 1 of fig. 4, which makes the device 1 suitable also for narrower types of hand weight rods R.

## Claims

1. Exercising device (1), comprising:
- a first element (10) having a longitudinal center axis (110);
- a second element (30) having a first end (30a) movably connected to the first element (10) via a connection device (40), and a second, free, end (30b);
- a pre-tensioned force resistance device (50) connected to the first or second elements (10, 30);
where the exercising device (1) is configured to be in an initial state, in which the second end (30b) is provided with a first distance (Di) from the longitudinal center axis (110);
where the exercising device (1) is configured to be in a compressed state, in which the second end (30b) is provided with a second distance (Dc) from the longitudinal center axis (I10), where the second distance (Dc) is shorter than the first distance (Di);
where the pre-tensioned force resistance device (50) is configured to force the second end (30b) of the second element (30) towards the initial state;
- the pre-tensioned force resistance device (50) comprises a force resistance body (55) provided between the first and second elements (10, 30); and
- the force resistance body (55) is made of a compressible material configured to be gradually more compressed as the first and second elements (10, 30) are pressed towards each other;
**characterized in that**:
where the first element (10) comprises a connection interface (15) for connection to a rod (R);
- the force resistance body (55) comprises a base (56) and a force resistance element (57a, 57b, 57c);
- the resistance element (57a, 57b, 57c) is protruding through an opening (17a, 17b, 17c) of the first element (10);
- the base (56) is configured to be in contact with the rod (R).

2. Exercising device (1) according to claim 1, where the pre-tensioned force resistance device (50) is configured to allow a movement of the second end (30b) from the initial state to the compressed state when the first and second elements (10, 30) are pressed towards each other with a compression force above a predefined threshold value.

3. Exercising device (1) according to claim 1 or 2, where the second element (30) is an elongated element having a longitudinal axis (130), where the longitudinal center axis (110) of the first element (10) is parallel with the longitudinal axis (130) of the second element (30) in the compressed state.

4. Exercising device (1) according to claim 3, where the second element (30) is oriented with its longitudinal axis (130) having an angle (α) relative to the longitudinal center axis (110) in the initial state, where the angle (α) is between 10° - 80°, preferably between 15° - 45° and more preferably between 25° - 35°.

5. Exercising device (1) according to any one of the above claims, where the first element (10) comprises an elongated cylindrical body (11) with a through bore (12).

6. Exercising device (1) according to claim 5, where a slit (13) is provided in the longitudinal direction of the cylindrical body (11).

7. Exercising device (1) according to claim 1, where the exercising device (1) is a hand actuated exercising device.

8. Exercising device (1) according to claim 1, where the force resistance body (55) comprises a first resistance element (57a) and a second resistance element (57b), where the first resistance element (57a) is located closer to the connection device (40) than the second resistance element (57b).

9. Exercising device (1) according to claim 8, where the first resistance element (57a) has a first height (H1) with respect to the first element (10) being larger than a second height (H2) of the second resistance element (57b) with respect to the first element (10).

10. Exercising device (1) according to claim 1, where the pre-tensioned force resistance device (50) is connected to the first and second elements (10, 30).

## Patentansprüche

1. Übungsvorrichtung (1), Folgendes aufweisend:
- in erstes Element (10), das eine Längsmittelachse (I10) aufweist;
- ein zweites Element (30), das ein erstes Ende (30a), das über eine Verbindungsvorrichtung (40) beweglich mit dem ersten Element (10) verbunden ist, und das ein zweites, freies Ende (30b) aufweist;
- eine vorgespannte Kraftwiderstandsvorrichtung (50), die mit dem ersten oder zweiten Element (10, 30) verbunden ist;
wobei die Übungsvorrichtung (1) derart ausgebildet ist, dass sie sich in einem Anfangszustand befindet, in dem das zweite Ende (30b) einen ersten Abstand (Di) von der Längsmittelachse (I10) aufweist;
wobei die Übungsvorrichtung (1) derart ausgebildet ist, dass sie sich in einem komprimierten Zustand befindet, in dem das zweite Ende (30b) einen zweiten Abstand (Dc) von der Längsmittelachse (I10) aufweist, wobei der zweite Abstand (Dc) kürzer als der erste Abstand (Di) ist; wobei die vorgespannte Kraftwiderstandsvorrichtung (50) dazu ausgebildet ist, das zweite Ende (30b) des zweiten Elements (30) in Richtung des Anfangszustands zu zwängen;
- wobei die vorgespannte Kraftwiderstandsvorrichtung (50) einen Kraftwiderstandskörper (55) aufweist, der zwischen dem ersten und dem zweiten Element (10, 30) angeordnet ist; und
- der Kraftwiderstandskörper (55) aus einem kompressiblen Material besteht, das dazu ausgebildet ist, dass es graduell stärker komprimiert wird, wenn das erste und das zweite Element (10, 30) gegeneinandergepresst werden;
**dadurch gekennzeichnet, dass**
das erste Element (10) eine Verbindungsschnittstelle (15) zur Verbindung mit einem Stab (R) aufweist;
- der Kraftwiderstandskörper (55) eine Basis (56) und ein Kraftwiderstandselement (57a, 57b, 57c) aufweist;
- das Kraftwiderstandselement (57a, 57b, 57c) durch eine Öffnung (17a, 17b, 17c) des ersten Elements (10) hervorsteht;
- die Basis (56) so ausgebildet ist, dass sie mit dem Stab (R) in Kontakt steht.

2. Übungsvorrichtung (1) nach Anspruch 1,
wobei die vorgespannte Kraftwiderstandsvorrichtung (50) so ausgebildet ist, dass sie eine Bewegung des zweiten Endes (30b) aus dem Anfangszustand in den komprimierten Zustand ermöglicht, wenn das erste und das zweite Element (10, 30) mit einer Kompressionskraft über einem vordefinierten Schwellenwert gegeneinandergedrückt werden.

3. Übungsvorrichtung (1) nach Anspruch 1 oder 2,
wobei das zweite Element (30) ein längliches Element mit einer Längsachse (I30) ist, wobei die Längsmittelachse (I10) des ersten Elements (10) im komprimierten Zustand parallel zur Längsachse (I30) des zweiten Elements (30) ist.

4. Übungsvorrichtung (1) nach Anspruch 3,
wobei das zweite Element (30) so orientiert ist, dass seine Längsachse (I30) in dem Anfangszustand einen Winkel (α) relativ zur Längsmittelachse (I10) aufweist, wobei der Winkel (α) zwischen 10° und 80°, vorzugsweise zwischen 15° und 45° und weiter vorzugsweise zwischen 25° und 35° beträgt.

5. Übungsvorrichtung (1) nach einem der vorhergehenden Ansprüche,
wobei das erste Element (10) einen länglichen zylindrischen Körper (11) mit einer Durchgangsbohrung (12) aufweist.

6. Übungsvorrichtung (1) nach Anspruch 5,
wobei in dem zylindrischen Körper (11) ein Schlitz (13) in Längsrichtung angeordnet ist.

7. Übungsvorrichtung (1) nach Anspruch 1,
wobei die Übungsvorrichtung (1) ein handbetätigbare Übungsvorrichtung ist.

8. Übungsvorrichtung (1) nach Anspruch 1,
wobei der Kraftwiderstandskörper (55) ein erstes Widerstandselement (57a) und ein zweites Widerstandselement (57b) aufweist, wobei das erste Widerstandselement (57a) näher an der Verbindungsvorrichtung (40) angeordnet ist als das zweite Widerstandselement (57b).

9. Übungsvorrichtung (1) nach Anspruch 8,
wobei das erste Widerstandselement (57a) eine erste Höhe (H1) in Bezug auf das erste Element (10) aufweist, die größer ist, als eine zweite Höhe (H2) des zweiten Widerstandselements (57b) in Bezug auf das erste Element (10).

10. Übungsvorrichtung (1) nach Anspruch 1,
wobei die vorgespannte Kraftwiderstandsvorrichtung (50) mit dem ersten und zweiten Element (10, 30) verbunden ist.

## Revendications

1. Dispositif d'exercice (1), comprenant :
- un premier élément (10) ayant un axe central longitudinal (I10) ;
- un deuxième élément (30) ayant une première extrémité (30a) reliée de manière mobile au premier élément (10) via un dispositif de liaison (40), et une deuxième extrémité (30b), libre ;
- un dispositif de résistance à la force tendu au préalable (50) relié aux premier ou deuxième éléments (10, 30) ;
où le dispositif d'exercice (1) est configuré pour être dans un état initial, dans lequel la deuxième extrémité (30b) est prévue avec une première distance (Di) à partir de l'axe central longitudinal (I10) ;
où le dispositif d'exercice (1) est configuré pour être dans un état compressé, dans lequel la deuxième extrémité (30b) est prévue avec une deuxième distance (Dc) à partir de l'axe central longitudinal (I10), où la deuxième distance (Dc) est plus courte que la première distance (Di) ;
où le dispositif de résistance à la force tendu au préalable (50) est configuré pour forcer la deuxième extrémité (30b) du deuxième élément (30) vers l'état initial ;
- le dispositif de résistance à la force tendu au préalable (50) comprend un corps de résistance à la force (55) prévu entre les premier et deuxième éléments (10, 30) ; et
- le corps de résistance à la force (55) est fait d'un matériau compressible configuré pour être progressivement plus compressé à mesure que les premier et deuxième éléments (10, 30) sont pressés l'un vers l'autre ;
**caractérisé en ce que** :
où le premier élément (10) comprend une interface de liaison (15) pour une liaison à une tige (R) ;
- le corps de résistance à la force (55) comprend une base (56) et un élément de résistance (57a, 57b, 57c) à la force ;
- l'élément de résistance (57a, 57b, 57c) fait saillie à travers une ouverture (17a, 17b, 17c) du premier élément (10) ;
- la base (56) est configurée pour être en contact avec la tige (R).

2. Dispositif d'exercice (1) selon la revendication 1, où le dispositif de résistance à la force tendu au préalable (50) est configuré pour permettre un mouvement de la deuxième extrémité (30b) à partir de l'état initial jusqu'à l'état compressé lorsque les premier et deuxième éléments (10, 30) sont pressés l'un vers l'autre avec une force de compression au-dessus d'une valeur de seuil prédéfinie.

3. Dispositif d'exercice (1) selon la revendication 1 ou 2, où le deuxième élément (30) est un élément allongé ayant un axe longitudinal (I30), où l'axe central longitudinal (I10) du premier élément (10) est parallèle à l'axe longitudinal (I30) du deuxième élément (30) dans l'état compressé.

4. Dispositif d'exercice (1) selon la revendication 3, où le deuxième élément (30) est orienté avec son axe longitudinal (I30) ayant un angle (α) par rapport à l'axe central longitudinal (I10) dans l'état initial, où l'angle (a) est entre 10° - 80°, de préférence entre 15° - 45° et de manière davantage préférée entre 25° - 35°.

5. Dispositif d'exercice (1) selon l'une quelconque des revendications ci-dessus, où le premier élément (10) comprend un corps cylindrique allongé (11) avec un trou débouchant (12).

6. Dispositif d'exercice (1) selon la revendication 5, où une fente (13) est prévue dans la direction longitudinale du corps cylindrique (11).

7. Dispositif d'exercice (1) selon la revendication 1, où le dispositif d'exercice (1) est un dispositif d'exercice actionné à la main.

8. Dispositif d'exercice (1) selon la revendication 1, où le corps de résistance à la force (55) comprend un premier élément de résistance (57a) et un deuxième élément de résistance (57b), où le premier élément de résistance (57a) est situé plus près du dispositif de liaison (40) que le deuxième élément de résistance (57b).

9. Dispositif d'exercice (1) selon la revendication 8, où le premier élément de résistance (57a) a une première hauteur (H1) par rapport au premier élément (10) qui est plus grande qu'une deuxième hauteur (H2) du deuxième élément de résistance (57b) par rapport au premier élément (10).

10. Dispositif d'exercice (1) selon la revendication 1, où le dispositif de résistance à la force tendu au préalable (50) est relié aux premier et deuxième éléments (10, 30).
